# EUROPÄISCHE PATENTSCHRIFT

(11) **EP 1 331 472 B1**
(45) Veröffentlichungstag und Bekanntmachung des Hinweises auf die Patenterteilung: **16.08.2006**
(21) Anmeldenummer: 03001447.6
(22) Anmeldetag: 22.01.2003
(51) Int. Cl.: G01M 1/22, G01M 1/04

(54) **Verfahren und Vorrichtung zum Auswuchten eines Kraftfahrzeugrades**
Procedure and device for balancing a vehicle wheel
Procédé et dispositif d'équilibrage d'une roue de véhicule

(30) Priorität: 25.01.2002 DE 10202898
(43) Veröffentlichungstag der Anmeldung: 30.07.2003
(73) Patentinhaber: Snap-on Equipment GmbH, 64319 Pfungstadt (DE)
(72) Erfinder: Rothamel, Karl, 64372 Ober-Ramstadt (DE); Drechsler, Josef, 64319 Pfungstadt (DE)
(74) Vertreter: Nöth, Heinz

(56) Entgegenhaltungen:
- EP-A- 1 114 989
- US-A- 5 773 719
- US-A- 5 895 849

## Beschreibung

Die Erfindung betrifft ein Verfahren und eine Vorrichtung zum Auswuchten eines Kraftfahrzeugrades, bei dem das mittels einer mitnehmenden Vorspannkraft an einer Hauptwelle einer Auswuchtmaschine befestigte Rad durch einen Wechselstrommotor mit einem bestimmten Antriebsmoment auf Messdrehzahl beschleunigt und nach Durchführung des Messlaufs mit einem Bremsmoment abgebremst wird.

### [Stand der Technik]

Bei einem derartigen aus der DE 100 00 235 A1 bekannten Verfahren und bekannten Vorrichtung wird das Kraftfahrzeugrad durch das vom Wechselstrommotor erzeugte Antriebsmoment auf Messdrehzahl beschleunigt. Bei Erreichen der Messdrehzahl wird während des Messlaufs an die Wicklungen des Motors ein reduzierter Versorgungsstrom geliefert, durch welchen im wesentlichen ein von Reibung und Luftwiderstand verursachter Drehzahlabfall kompensiert wird, so dass der Unwuchtmesslauf bei der gewünschten Messdrehzahl durchgeführt wird. Nach Beendigung des Messlaufs wird das Kraftfahrzeugrad abgebremst, wobei vom Wechselstrommotor das erforderliche Bremsmoment geliefert werden kann. Bei der bekannten Vorrichtung ist der Wechselstrommotor als Einphasen-Wechselstrommotor ausgebildet.

Um die Zykluszeit, welche für das Hochlaufen der Auswuchtmaschine auf Messdrehzahl, für den Messlauf und für das Abbremsen benötigt wird, möglichst kurz zu halten, damit eine wirtschaftliche Ausnutzung der Auswuchtmaschine erreicht wird, ist der Antriebsmotor, insbesondere Einphasen-Wechselstrommotor, für den Antrieb der Hauptwelle zur Erzeugung eines ausreichenden Drehmoments, beispielsweise in der Grössenordnung von ca. 24 Nm ausgelegt. Zur Übertragung des hohen Drehmoments von der Hauptwelle auf das Kraftfahrzeugrad ist es erforderlich, dieses mit einer entsprechend hohen mitnehmenden Vorspannkraft an der Hauptwelle drehfest zu befestigen. Andernfalls besteht die Gefahr des Rutschens des Kraftfahrzeugrades an der Hauptwelle beim Hochlauf auf Messdrehzahl und/oder beim Abbremsen nach Durchführung des Messlaufs. Für einen genauen Unwuchtausgleich ist es jedoch erforderlich, dass das Kraftfahrzeugrad drehfest mit der Hauptwelle verbunden bleibt und seine Drehwinkelposition an der Hauptwelle beibehält. Beim Auswuchten von Rädern mit Design-Felgen, insbesondere aus Leichtmetall, besteht die Gefahr der Beschädigung der Scheibenräder durch die hohen Spannkräfte, welche zum Befestigen des Kraftfahrzeugrades an der Hauptwelle benötigt werden. Beim Auswuchten von Motorrad-Rädern ist es erforderlich, den bzw. die für die Erzeugung der mitnehmenden Vorspannkraft verwendeten Klemmhebel mit hoher Andrückkraft auf den Reifen aufzudrücken. Hierdurch besteht die Gefahr der Verbiegung der Spannwelle, auf welcher das Motorrad-Rad beim Unwuchtmesslauf gedreht wird und damit zur Verlagerung des Radmittelpunktes. Eine exakte Auswuchtung des Motorrad-Rades ist dann nicht möglich.

EP-A-1 114 989 zeigt eine Vorrichtung zum Messen einer Rotorunwucht mit einer Hauptwelle, an welcher der Rotor befestigbar ist, und einem Einphasen-Wechselstrommotor für den Antrieb der Welle, der eine Hauptwicklung und einer phasenmäßig versetzten Hilfswicklung, die mit einem Strom über eine Motorsteuerung versorgt werden, und einer Steuereinrichtung mit einer Einrichtung zur Reduzierung des Stromes durch beide Wicklungen bei Erreichen der Messdrehzahl, sodass vom Motor ein vermindertes Drehmoment erzeugt wird, durch welches im Wesentlichen ein von Reibung und Luftwiderstand verursachter Drehzahlabfall kompensiert wird.

### [Aufgabe der Erfindung]

Aufgabe der Erfindung ist es daher, ein Verfahren der eingangs genannten Art zu schaffen, bei dem eine Beschädigung von Rädern aus empfindlichem Material bzw. ein Verbiegen der Spannwelle vermieden werden kann.

Diese Aufgabe wird durch das Verfahren des Patentanspruches 1 und die Verwendung einer Vorrichtung gemäß Patentanspruches 2 gelöst.

Bei der Erfindung wird im Gegensatz zu dem herkömmlichen Betrieb von Auswuchtmaschinen beim Hochlauf auf die Messdrehzahl das vom Antriebsmotor erzeugte Drehmoment in Abhängigkeit von dem auf der Hauptwelle befestigten Radtyp beeinflusst. Bei Kraftfahrzeugrädern, deren Scheibenräder aus massivem Material, beispielsweise Stahl, bestehen, kann der Antriebsmotor ein hohes Drehmoment, beispielsweise von ca. 24 Nm erzeugen, um die Messdrehzahl möglichst rasch zu erreichen. Auch beim Abbremsen kann ein hohes Bremsmoment erzeugt werden, um das Kraftfahrzeugrad nach Durchführung des Messlaufs in möglichst kurzer Zeit in die gewünschte Ausgleichsposition zu bringen. Bei Kraftfahrzeugrädern mit Scheibenrädern aus Leichtmetall und insbesondere mit Design-Felgen wird das vom Antriebsmotor erzeugte Drehmoment auf 50%, 25% oder noch stärker verringert. Die Verringerung des Drehmoments wird auch bei Motorrad-Rädern durchgeführt, damit die Vorspannkraft, mit welcher der Klemmhebel der Mitnahmevorrichtung auf den Reifen aufgedrückt wird, so weit verringert werden kann, dass ein Verbiegen der Spannwelle, auf welcher das Motorrad-Rad während des Unwuchtmesslaufs umläuft, vermieden wird.

In vorteilhafter Weise können beim Auswuchten eines Kraftfahrzeugrades in Abhängigkeit vom auszuwuchtenden Radtyp das Drehmoment während des Hochlaufs auf Messdrehzahl und das Bremsmoment beim Abbremsen nach Durchführung des Messlaufs so eingestellt werden, dass auch bei verringerter mitnehmender Vorspannkraft zwischen Hauptwelle und Kraftfahrzeugrad die drehfeste Verbindung zwischen Hauptwelle und Kraftfahrzeugrad beibehalten wird.

Durch die Verringerung des Antriebs- und Bremsmomentes ist es möglich, Kraftfahrzeugräder mit Scheibenrädern aus empfindlichen Material, beispielsweise Leichtmetall, und Motorrad-Räder mit verringerter Vorspann- bzw. Klemmkraft mit der Hauptwelle drehfest zu verbinden, ohne dass die Gefahr des Verrutschens des Kraftfahrzeugrades und damit der Messwertverfälschung auftritt.

### [Beispiele]

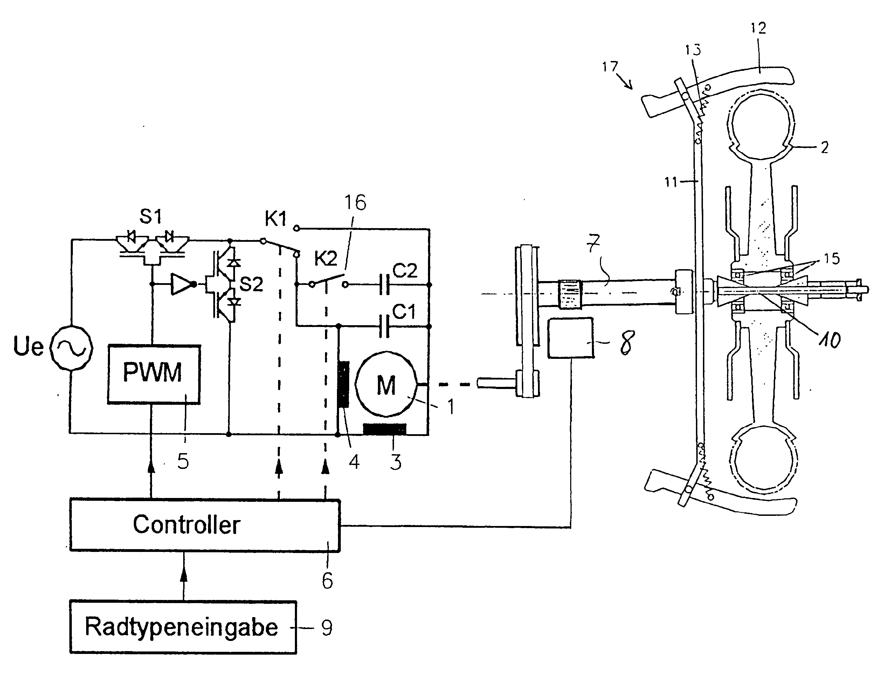

Anhand der Figur wird an einem Ausführungsbeispiel die Erfindung noch näher erläutert.

Die Figur zeigt in Blockbilddarstellung schematisch eine Messanordnung und Antriebsanordnung einer Radauswuchtmaschine.

Im dargestellten Ausführungsbeispiel ist eine Hauptwelle 7 einer Auswuchtmaschine gezeigt, welche von einem Elektromotor 1 über ein Getriebe, beispielsweise Riementrieb antreibbar ist. Der Elektromotor ist als Wechselstrommotor, insbesondere Einphasen-Wechselstrommotor ausgebildet, wie er beispielsweise aus der DE 100 00 235 A1 bei einer Radauswuchtmaschine bekannt ist. Auf die Hauptwelle 7 der Auswuchtmaschine wird in bekannter Weise ein Kraftfahrzeugrad 2 aufgespannt. Beim dargestellten Ausführungsbeispiel handelt es sich um ein Motorrad-Rad. Zur Unwuchtmessung wird die Hauptwelle 7 und das Kraftfahrzeugrad 2 in einem Hochlauf vom Elektromotor 1 auf Messdrehzahl angetrieben. Während des Messlaufs werden aus der Rotorunwucht resultierende Kräfte an der Hauptwelle 2 gemessen und bezogen auf Ausgleichsebenen am Kraftfahrzeugrad 2 in Unwuchtausgleichsgrößen umgerechnet. Eine geeignete Messanordnung ist beispielsweise aus der DE 198 44 975 A1 bekannt. Zur gesteuerten Stromversorgung beim Hochlauf besitzt die Auswuchtmaschine einen von einer Pulsbreitenmodulation (PWM) 5 gesteuerten Wechselspannungssteller mit einem Längsschalter S1 und einem Kommutierungsschalter S2, über welche Statorwicklungen 3, 4 des Elektromotors 1 mit Strom versorgt werden. Mit Hilfe eines vorzugsweise als Relais ausgebildeten Umschalters K1 wird die Drehrichtung des Elektromotors 1 eingestellt. Bei der in der Figur dargestellten Schaltposition des Umschalters K1 ist beispielsweise die Vorwärtsdrehrichtung, in welcher das Kraftfahrzeugrad 2 auf Messdrehzahl gebracht wird, dargestellt. Durch einen Blindwiderstand, insbesondere eine Kapazität, welche in der Figur mit der Statorwicklung 3 in Reihe geschaltet ist, wird erreicht, dass die beiden Statorwicklungen 3, 4 mit einem Phasenunterschied von insbesondere 90° mit dem Motorstrom versorgt werden. Der Motorstrom wird von einer Wechselspannungsquelle Ue geliefert. Anstelle eines Kondensators können zur Änderung der Kapazität zwei oder mehr Kondensatoren verwendet werden, welche in Abhängigkeit von der Drehzahl in den Motorstromkreis geschaltet oder von diesem getrennt werden, wie es beispielsweise in der DE 100 00 235 A1 beschrieben ist. Beim dargestellten Ausführungsbeispiel wird die Kapazität im Hilfsstrang von zwei parallel schaltbaren Drehmoment-Kondensatoren C1 und C2 gebildet, wobei einer der beiden Kondensatoren C1 ständig in den Hilfsstrang und der andere Kondensator C1 mittels eines Schalters (K2) 16 in Abhängigkeit vom gewünschten Drehmoment zu- oder abgeschaltet wird.

Sowohl der Längsschalter S1 als auch der Kommutierungsschalter S2 bestehen aus zwei anti-seriell geschalteten Halbleiterschaltern. Diese Halbleiterschalter sind vorzugsweise als IGBTs ausgebildet. Es können jedoch auch MOSFETs verwendet werden. Die Leistungshalbleiterschalter besitzen eine integrierte antiparallele Diode, so dass bei negativer Polarität über dem jeweiligen Halbleiterschalter diese Diode Strom führt und keine elektrische Spannung entstehen kann. Da die Halbleiterschalter Wechselspannung sperren oder Wechselstrom beim Betrieb des Wechselspannungsstellers führen müssen und die Halbleiterschalter aber nur Spannung einer Polarität sperren oder durchschalten, sind jeweils zwei Halbleiterschalter in anti-serieller Schaltung sowohl für den Längsschalter S1 als auch für den Kommutierungsschalter S2 vorgesehen.

Bei der in der Figur dargestellten Schaltstellung des Umschalters K1 wird vom Längsschalter S1 die Wechselspannung der Wechselspannungsquelle Ue, beispielsweise die Netzspannung zum Elektromotor 1 weitergegeben. Der Kommutierungsschalter S2 wird von der Pulsbreitenmodulation (PWM) 5 so angesteuert, dass er den Strom der Motorinduktivität solange übernimmt, wie der Längsschalter S1 abgeschaltet ist (synchrone Kommutierung). Hierzu werden die beiden Gates der den Längsschalter S1 bildenden Halbleiterschalter, z.B. die beiden IGBTs im Gegentakt zu den beiden Gates der den Kommutierungsschalter S2 bildenden Halbleiterschalter angesteuert. Hierbei ist sichergestellt, dass die von der Pulsbreitenmodulation 5 an die Gates des Längsschalters S1 und des Kommutierungsschalters S2 gelegten Steuerspannungen nicht gleichzeitig, sondern im Wechseltakt bzw. Gegentakt geliefert werden. Durch das Tastverhältnis des PWM-Signales wird die Stärke des den Statorwicklungen 3, 4 zugeführten Motorstroms bestimmt. Die Taktfrequenz des PWM-Signals wird vorzugsweise in der Größenordnung zwischen 3 bis 10 kHz moduliert.

Um den Rotor nach dem Messlauf in einer bestimmten Position, beispielsweise Ausgleichs-Drehwinkelposition anzuhalten, wird durch den Elektromotor 1 ein Gegendrehmoment erzeugt. Hierzu wird der Umschalter K1 in Abhängigkeit von der jeweiligen Drehrichtung des Kraftfahrzeugrades 2 in eine entsprechende Schalterstellung, z.B. die oben liegende Schalterstellung in der Figur gebracht. In dieser Schaltposition ist die Kapazität des Hilfsstranges mit der Statorwicklung 4 in Reihe geschaltet. Der Schalter S2 wirkt bei diesem Motorbremsbetrieb als Längsschalter und der Schalter S1 als Kommutierungsschalter. Wie beim Hochlauf werden die Statorwicklungen 3, 4 über den Wechselspannungssteller mit Wechselstrom versorgt. Dabei wird ein Gegendrehmoment erzeugt, mit welchem die Drehung des Kraftfahrzeugrades 2 und der Hauptwelle 7 abgebremst werden. Die Abbremsung kann gesteuert durch den Betrieb der Pulsbreitenmodulation 5 in der Weise erfolgen, dass das Kraftfahrzeugrad 2 in der gewünschten Ausgleichs-Drehwinkelposition angehalten wird. Ferner ist es möglich, den Zeitpunkt des Umschaltens des Schalters K1 in den Motorbremsbetrieb so zu legen, dass bei bekannter Bremswirkung, welche durch das vom Elektromotor 1 erzeugte Drehmoment bewirkt wird, und in Abhängigkeit von der momentanen Drehzahl der Rotor 2 in der Ausgleichs-Drehwinkelposition angehalten wird.

Zur Steuerung des Umschalters K1 und der Pulsbreitenmodulation 5 kann eine Steuereinrichtung 6 vorgesehen sein, welche mit einer Abtasteinrichtung 8 verbunden ist, durch die die jeweilige Drehwinkelposition der Hauptwelle 7 und damit des Kraftfahrzeugrades 2 und/oder die Drehzahl sowie die Drehrichtung abgetastet werden.

Beim Auswuchten eines Motorrad-Rades wird das Motorrad-Rad in seinen eigenen Lagern 15 auf einer Spannwelle 10 gelagert. Die Spannwelle 10 kann in einer axialen Bohrung der Hauptwelle 7 beispielsweise mit Gewindeeingriff an der Hauptwelle 7 verankert sein oder an einer Mitnahmeeinrichtung 17, welche mit der Hauptwelle 7 drehfest verbunden ist, vorgesehen sein. Die Mitnahmeeinrichtung 17 besitzt mindestens einen im wesentlichen radial abstehenden Mitnehmerhebel 11, an welchem schwenkbar ein Klemmhebel 12 gelagert ist. Der Klemmhebel 12 wird mit Hilfe einer zwischen dem Mitnehmerhebel 11 und dem Klemmhebel 12 wirkenden Spannfeder 13 auf die Umfangsfläche eines Reifens 14 des Motorrad-Rades gedrückt. In der Figur ist eine diametral am Rad angreifende Mitnehmereinrichtung 17 dargestellt. Es kann auch eine nur einseitig am Motorrad-Rad angreifende Mitnehmereinrichtung 17 verwendet werden.

Zur Anpassung an den Nabendurchmesser ist die Spannwelle 10 relativ dünn ausgebildet. Durch die Spannfeder 13 muss jedoch auf den Klemmhebel 12 eine ausreichende Spannkraft ausgeübt werden, damit der Klemmhebel 12 mit ausreichender Vorspannung auf die Oberfläche des Reifens 14 gedrückt wird, um ein Durchrutschens des Rades beim Hochlauf auf die Messdrehzahl und beim Abbremsen nach dem Messlauf zu vermeiden. Wenn bei hohem Antriebsdrehmoment bzw. hohem Bremsmoment, wie es bei herkömmlichen Auswuchtmaschinen der Fall ist, die Spannkraft der Spannfeder 13 entsprechend dimensioniert ist, besteht die Gefahr, dass die relativ dünne Spannwelle 10 durchgebogen wird, so dass der Radmittelpunkt sich gegenüber der Hauptwelle 7 verlagert. Eine einwandfreie Unwuchtmessung ist dann nicht mehr möglich.

Bei Kraftfahrzeugrädern mit Scheibenrädern, die eine empfindliche Oberfläche haben, beispielsweise mit Design-Felgen, besteht die Gefahr der Beschädigung beim zentrierten Aufspannen des Kraftfahrzeugrades auf die Hauptwelle 7. Auch dabei kann es zur Verlagerung des Radmittelpunktes kommen, wenn hohe Spannkräfte für eine ausreichende Mitnahme beim Hochlauf angewendet werden müssen.

Bei der Erfindung wird zur Behebung des Problems das Drehmoment, welches vom Elektromotor beim Hochlauf auf die Messdrehzahl geliefert wird, und das Drehmoment, welches nach dem Messlauf beim Abbremsen der Hauptwelle zum Einsatz kommt, so weit reduziert, dass bei den in Rede stehenden problematischen Radtypen verringerte Vorspannkräfte für die drehfeste Verbindung des Kraftfahrzeugrades mit der Hauptwelle 7 zum Einsatz kommen können. Diese Vorspannkräfte können so weit reduziert werden, dass eine die Unwuchtmessung verfälschende Verlagerung des Mittelpunktes des Kraftfahrzeugrades 2 gegenüber der Hauptwelle 7 beim Hochlauf und beim Abbremsen vermieden wird.

Beim dargestellten Ausführungsbeispiel ist eine Eingabeeinrichtung 9 für den jeweiligen Radtyp, welcher auf der Hauptwelle 7 aufgespannt ist, vorgesehen. In Abhängigkeit davon wird das Antriebssystem, insbesondere die Stromversorgungsschaltung für den Elektromotor 1 zur Erzeugung des entsprechenden Versorgungsstroms und damit des Drehmoments gesteuert. Gemäß dem dargestellten Ausführungsbeispiel wird durch die Steuereinrichtung 6, an welche die Radtypeneingabeinformation weitergegeben wird, die Pulsbreitenmodulation 5 für den Wechselspannungssteller (S1, S2) eingestellt. Ferner kann zusätzlich oder allein die durch Drehmomentkondensatoren C1 und C2 einstellbare Kapazität im jeweiligen Hilfsstrang durch Öffnen oder Schließen des von der Steuereinrichtung 6 angesteuerten Schalters 16 beim Hochlauf und/oder beim Abbremsen eingestellt werden. Falls mehrere Drehmomentkondensatoren vorgesehen sind, können ein oder mehrere dieser Kondensatoren abgetrennt werden. Hierdurch erreicht man in Abhängigkeit von dem an der Hauptwelle 7 vorhandenen Radtyp die entsprechende Einstellung des Drehmoments. In vorteilhafter Weise wird nicht nur der Hochlauf des Kraftfahrzeugrades 2 auf die Messdrehzahl durch die in der Figur dargestellte Antriebsvorrichtung bewirkt, sondern auch das Abbremsen nach dem Messlauf. Hierzu wird, wie schon erläutert, der Umschalter K1 in die entsprechende Position gebracht.

Es ist jedoch auch möglich, eine gesonderte Bremsvorrichtung vorzusehen, deren Bremsmoment ebenfalls in Abhängigkeit von dem Radtyp eingestellt und gegebenenfalls reduziert wird.

Eine Reduzierung bzw. Beeinflussung des Drehmoments beim Hochlauf auf die Messdrehzahl und beim Abbremsen nach dem Messlauf kann auch mit Hilfe der in der DE 100 00 235 A1 beschriebenen Vorrichtung durchgeführt werden, wobei die Steuereinrichtung, mit welcher die Drehmomenteinstellung durchgeführt wird, in Abhängigkeit von der Radtypeneingabe beim Hochlauf und beim Abbremsen entsprechend betätigt wird.

### [Bezugszeichenliste]

- 1: Elektromotor (Einphasen-Wechselstrommotor)
- 2: Rotor (Kraftfahrzeugrad)
- 3: Statorwicklung
- 4: Statorwicklung
- 5: Pulsbreitenmodulation
- 6: Steuereinrichtung
- 7: Hauptwelle
- 8: Abtasteinrichtung
- 9: Eingabeeinrichtung für Radtypen
- 10: Spannwelle
- 11: Mitnehmerhebel
- 12: Klemmhebel
- 13: Spannfeder
- 14: Reifen
- 15: Lager
- 16: Schalter K2
- 17: Mitnahmeeinrichtung

- S1: Längsschalter (oder Kommutierungsschalter)
- S2: Kommutierungsschalter (oder Längsschalter)
- K1: Umschalter (Relais)

- C1: Drehmomentkondensatoren
- C2: Drehmomentkondensatoren

## Patentansprüche

1. Verfahren zum Auswuchten eines Kraftfahrzeugrades bzw. Motorrad-rades, bei dem das mittels einer mitnehmenden Vorspannkraft drehfest mit einer Hauptwelle einer Auswuchtmaschine verbundene Rad auf Messdrehzahl mit einem Antriebsmoment beschleunigt und nach Durchführung des Messlaufs mit einem Bremsmoment abgebremst wird,
**dadurch gekennzeichnet, dass**, wenn wegen der von einer Mitnahmeeinrichtung ausgeübten Vorspannkraft das Rad beschädigt würde oder eine die Unwuchtmessung verfälschende Verlagerung des Mittelpunktes des Rades auftreten würde, eine verringerte mitnehmende Vorspannkraft angebracht wird, und ein kleineres Antriebsmoment bzw. Bremsmoment eingestellt wird.

2. Verwendung einer Vorrichtung zum Auswuchten eines Kraftfahrzeugrades zur Durchführung des Verfahrens nach Anspruch 1, wobei die Vorrichtung aufweist eine an einem Maschinenrahmen drehbar gelagerten Hauptwelle (7), einen Elektromotor (1) zum Antrieb der Hauptwelle (7), eine Stromversorgungsschaltung (S1, S2, C1, C2, 3, 4) für den Elektromotor (1) und eine Spanneinrichtung (11 - 13) zur Erzeugung einer mitnehmenden Vorspannkraft zur drehfesten Verbindung des Kraftfahrzeugrades (2) mit der Hauptwelle (7), wobei ein kleineres Antriebsmoment bzw. Bremsmoment über den von der Stromversorgungsschaltung gelieferten Motorversorgungsstrom durch Einstellmittel (5, 6, 9, 16) einstellbar ist.

3. Verwendung nach Anspruch 2,
wobei die Stromversorgungsschaltung zur Versorgung des als Wechselstrommotor, insbesondere Einphasen-Wechselstrommotor, ausgebildeten Elektromotors (1) einen durch Pulsbreitenmodulation (5) gesteuerten Wechselspannungssteller (S1, S2) aufweist, wobei die Pulsbreitenmodulation (5) in Abhängigkeit vom Typ des mit der Hauptwelle (7) drehfest verbundenen Kraftfahrzeugrades einstellbar ist.

4. Verwendung nach Anspruch 3,
wobei der Wechselspannungssteller einen Längsschalter (S1) und Kommutierungsschalter (S2), welche von der Pulsbreitenmodulation (5) gesteuert sind, aufweist.

5. Verwendung nach Anspruch 4,
wobei der Längsschalter (S1) und der Kommutierungsschalter (S2) von jeweils zwei antiseriell geschalteten Halbleiterschaltern gebildet sind.

6. Verwendung nach einem der Ansprüche 2 bis 5,
wobei der als Einphasen-Wechselstrommotor ausgebildete Elektromotor (1) zwei Statorwicklungen (3, 4) und wenigstens einen je nach Drehrichtung mit einer der beiden Statorwicklungen in Reihe geschalteten Drehmomentkondensator (C1, C2) für eine phasenverschobene Stromversorgung aufweist, wobei der wenigstens eine Drehmomentkondensator (C1, C2) in Abhängigkeit vom Typ des auf die Hauptwelle (7) aufgespannten Kraftfahrzeugrades (2) zu- oder abschaltbar ist.

7. Verwendung nach Anspruch 6,
wobei der wenigstens eine Drehmomentskondensator (C1, C2) mittels eines Umschalters (K1) mit einer der beiden Statorwicklungen (3, 4) in Reihe schaltbar ist.

8. Verwendung nach Anspruch 6 oder 7,
wobei die beiden Statorwicklungen (3, 4) um 90° phasenverschoben mit Strom versorgt sind.

9. Verwendung nach Anspruch 4 oder 5,
**dadurch gekennzeichnet, dass** die Halbleiterschalter als MOSFETs oder IGBTs ausgebildet sind.

## Claims

1. A method of balancing a motor vehicle wheel or motorcycle wheel in which the wheel connected non-rotatably to a main shaft of a balancing machine by means of an entraining prestressing force is accelerated to a measurement rotary speed by a drive torque and braked by a braking torque after the measuring run has been carried out,
**characterised in that** if because of the prestressing force exerted by an entrainment means the wheel were damaged or a displacement of the centre point of the wheel, which falsifies the unbalance measurement, were to occur, a reduced entraining prestressing force is applied and a lower drive torque or braking torque is set.

2. Use of an apparatus for balancing a motor vehicle wheel for carrying out the method according to claim 1 wherein the apparatus has a main shaft (7) rotatably mounted to a machine frame, an electric motor (1) for driving the main shaft (7), a power supply circuit (S1, S2, C1, C2, 3, 4) for the electric motor (1) and a clamping device (11 - 13) for producing an entraining prestressing force for non-rotatably connecting the motor vehicle wheel (2) to the main shaft (7), wherein a lower drive torque or braking torque can be set by adjusting means (5, 6, 9, 16) by way of the motor supply current supplied by the power supply circuit.

3. Use according to claim 2 wherein the power supply circuit for supplying the electric motor (1) which is in the form of an ac motor, in particular a single-phase ac motor, has an ac voltage controller (S1, S2) controlled by pulse width modulation (5), wherein pulse width modulation (5) can be adjusted in dependence on the type of motor vehicle wheel non-rotatably connected to the main shaft (7).

4. Use according to claim 3 wherein the ac voltage controller has a series switch (S1) and a commutation switch (S2) which are controlled by the pulse width modulation (5).

5. Use according to claim 4 wherein the series switch (S1) and the commutation switch (S2) are each formed by two semiconductor switches connected in mutually opposite serial relationship.

6. Use according to one of claims 2 to 5 wherein the electric motor (1) which is in the form of a single-phase ac motor has two stator windings (3, 4) and at least one torque capacitor (C1, C2) connected in series with one of the two stator windings depending on the respective direction of rotation for a phase-shifted power supply, wherein the at least one torque capacitor (C1, C2) can be switched on or off in dependence on the type of motor vehicle wheel (2) which is clamped on the main shaft (7).

7. Use according to claim 6 wherein the at least one torque capacitor (C1, C2) can be connected in series with one of the two stator windings (3, 4) by means of a change-over switch (K1).

8. Use according to claim 6 or claim 7 wherein the two stator windings (3, 4) are supplied with current phase-shifted through 90°.

9. Use according to claim 4 or claim 5 **characterised in that** the semiconductor switches are in the form of MOSFETs or IGBTs.

## Revendications

1. Procédé pour équilibrer une roue de véhicule automobile ou une roue de motocyclette, dans lequel la roue solidaire en rotation d' un arbre principal d'une machine à équilibrer à l'aide d'une force entraîneuse de précontrainte est accélérée jusqu'à la vitesse de rotation de mesure par un couple d'entraînement et, après que l'opération de mesure a été réalisée, est freinée par un couple de freinage,
**caractérisé en ce que**, si la roue était abîmée à cause de la force de précontrainte exercée par une installation d'entraînement ou si le point central de la roue était décalé en faussant la mesure de balourd, on applique une force de précontrainte entraîneuse plus petite et on établit un couple d'entraînement ou de freinage plus petit.

2. Utilisation d'un dispositif pour équilibrer une roue de véhicule automobile afin d'exécuter le procédé suivant la revendication 1, dans laquelle le dispositif comporte un arbre principal (7) monté de façon à pouvoir tourner sur un bâti de machine, un moteur électrique (1) pour entraîner l'arbre principal (7), un circuit d'alimentation électrique (S1, S2, C1, C2, 3, 4) pour le moteur électrique (1) et une installation de contrainte (11 à 13) pour produire une force de précontrainte entraîneuse afin de rendre la roue de véhicule automobile (2) solidaire en rotation de l'arbre principal (7), un couple d'entraînement ou de freinage plus petit pouvant être établi grâce à des moyens de réglage (5, 6, 9, 16) par l'intermédiaire du courant d'alimentation du moteur fourni par le circuit d'alimentation électrique.

3. Utilisation selon la revendication 2, dans laquelle le circuit d'alimentation électrique pour alimenter le moteur électrique (1) sous forme de moteur à courant alternatif, en particulier de moteur à courant alternatif monophasé, comporte un régleur de courant alternatif (S1, S2) commandé par modulation d'impulsions en largeur (5), la modulation d'impulsions en largeur (5) pouvant être réglée en fonction du type de roue de véhicule automobile solidaire en rotation de l'arbre principal (7).

4. Utilisation selon la revendication 3, dans laquelle le régleur de courant alternatif comporte un interrupteur longitudinal (S1) et un interrupteur de commutation (S2), qui sont commandés par la modulation d'impulsions en largeur (5).

5. Utilisation selon la revendication 4, dans laquelle l'interrupteur longitudinal (S1) et l'interrupteur de commutation (S2) sont formés chacun par deux commutateurs à semi conducteurs montés tête-bêche.

6. Utilisation selon l'une des revendications 2 à 5, dans laquelle le moteur électrique (1) sous forme de moteur à courant alternatif monophasé comporte deux enroulements de stator (3, 4) et au moins un condensateur à couple de rotation (C1, C2) monté en série avec l'un des deux enroulements de stator en fonction du sens de rotation et destiné à l'alimentation déphasée en courant, l'au moins un condensateur à couple de rotation (C1, C2) pouvant être connecté ou déconnecté en fonction du type de la roue de véhicule automobile (2) bloqué sur l'arbre principal (7).

7. Utilisation selon la revendication 6, dans laquelle au moins un condensateur à couple de rotation (C1, C2) peut être monté en série avec l'un des deux enroulements de stator (3, 4) à l'aide d'un commutateur inverseur (K1).

8. Utilisation selon la revendication 6 ou 7, dans laquelle les deux enroulements de stator (3, 4) sont alimentés en courant déphasé de 90°.

9. Utilisation selon la revendication 4 ou 5, **caractérisé en ce que** les commutateurs à semi conducteurs sont des MOSFET ou des IGBT.
